# EUROPÄISCHE PATENTSCHRIFT

(11) **EP 2 770 882 B1**
(45) Veröffentlichungstag und Bekanntmachung des Hinweises auf die Patenterteilung: **28.12.2022**
(21) Anmeldenummer: 12778620.0
(22) Anmeldetag: 09.10.2012
(51) Int. Cl.: A47F 3/04, F25D 23/08, F25D 23/02

(54) **KÜHL- UND/ODER GEFRIERGERÄT**
REFRIGERATING AND/OR FREEZING APPLIANCE
APPAREIL DE RÉFRIGÉRATION ET/OU DE CONGÉLATION

(30) Priorität: 26.10.2011 DE 202011051763 U
(43) Veröffentlichungstag der Anmeldung: 03.09.2014
(73) Patentinhaber: REHAU Industries SE & Co. KG, 95111 Rehau (DE)
(72) Erfinder: OTT, Michael, 95111 Rehau (DE)
(86) Internationale Anmeldenummer: PCT/EP2012/004218
(87) Internationale Veröffentlichungsnummer: WO 2013/060417

(56) Entgegenhaltungen:
- EP-A1- 0 583 984
- WO-A1-2004/106823
- WO-A1-2007/065554
- US-A- 4 831 780

## Beschreibung

Die Erfindung betrifft ein Kühl- und/oder Gefriergerät nach dem Oberbegriff des Anspruches 1. Ein solches Gerät ist z.B. aus der WO 2007/065554 A1 bekannt.

Ein weiteres Kühl- und / oder Gefriergerät ist bspw. in der WO 2005/021886 A1 offenbart. Das Kühl- und / oder Gefriergerät umfasst dabei einen Gerätekorpus sowie eine Türbaugruppe mit einem Glaselement, wobei das Glaselement einen Scheibenverbund aus insgesamt drei Scheiben aufweist, der an seinem Randabschnitt von einem Rahmenprofil aufgenommen ist. Die Türbaugruppe ist über eine Dichtung am Gerätekorpus angeordnet, wobei zwischen dem Gerätekorpus und dem Rahmenprofil und / oder dem Randabschnitt des Scheibenverbundes ein Zwischenraum gebildet ist. Nachteilig bei diesem Kühl- und / oder Gefriergerät wird gesehen, dass aus dem Innenraum des Kühl- und / oder Gefriergerätes die gekühlte Luft über den Zwischenraum zwischen dem Gerätekorpus und der Türbaugruppe entweichen kann, so dass die Energiebilanz dieses Kühl- und / oder Gefriergerätes nicht optimal ist.

Ein weiterer Nachteil dieses Kühl- und / oder Gefriergerätes wird darin gesehen, dass an dem Rahmenprofil der Türbaugruppe ein den Scheibenverbund aufnehmender Steg so angeordnet ist, dass bei der Schließstellung dieser Türbaugruppe der Steg direkt am Gerätekorpus anliegt und somit die Türbaugruppe das Kühl- und / oder Gefriergerät nicht vollständig abgedichtet, was zum einen zu erhöhtem Stromverbrauch und zum anderen zu einem Beschlagen der einzelnen Scheiben des Scheibenverbundes führt.

Ebenfalls nachteilig bei dem Kühl- und / oder Gefriergerät ist, dass die zum Innenraum weisende Scheibe des Scheibenverbundes bis in den Randbereich des Gerätekorpus geführt ist, so dass die im Innenraum des Kühl- und / oder Gefriergerätes befindliche gekühlte Luft bis in den Randbereich an die Dichtung bzw. dem gegenüberliegenden Gerätekorpus anliegt, so dass hier ebenfalls die Energiebilanz dieses Kühl- und / oder Gefriergerätes negativ beeinflusst ist.

Weiterhin offenbart die US 4,831,780 A ein Kühl- und / oder Gefriergerät, welches einen verbesserten Wärmewirkungsgrad aufweisen soll und welches für die kondensationsfreie Verwendung in Normaltemperaturkühlgeräten angepasst ist. Dabei weist das Kühl- und / oder Gefriergerät einen Gerätekorpus sowie eine Türbaugruppe auf, mit einem Glaselement, wobei das Glaselement einen Scheibenverbund aufweist, der an seinem Randabschnitt von einem Rahmenprofil aufgenommen ist und wobei die Türbaugruppe in Schließstellung über eine Dichtung am Gerätekorpus angeordnet ist. Die Verbindung zwischen der Türbaugruppe und dem Gerätekorpus erfolgt über eine an sich bekannte Dichtung mit einem Magnet, welche direkt, unmittelbar und allein die Abgrenzung zum Innenbereich des Kühl- und / oder Gefriergerätes realisiert. Eine zweite zusätzliche Dichtung ist außerhalb des Innenbereiches, und zwar direkt neben der ersten Dichtung angeordnet. Beide Dichtungen sind kraftschlüssig und / oder formschlüssig entweder an dem Gerätekorpus und / oder am Rahmenprofil angeordnet.

Hier setzt die Erfindung ein, die sich die Aufgabe gestellt hat, die Nachteile des bekannten Standes der Technik zu überwinden und ein Kühl- und / oder Gefriergerät in vorteilhafter Weise weiterzubilden, welches kostengünstig und wirtschaftlich herstellbar ist, welches im Vergleich zum Stand der Technik energieeffizienter sowie optisch ansprechender ist. Diese Aufgabe wird erfindungsgemäß durch ein Kühl- und / oder Gefriergerät gemäß den Merkmalen des Anspruches 1 gelöst. Weitere vorteilhafte Ausgestaltungen sind in den abhängigen Ansprüchen beschrieben.

Es wurde überraschend festgestellt, dass ein Kühl- und / oder Gefriergerät umfassend einen Gerätekorpus sowie eine Türbaugruppe mit einem Glaselement, wobei das Glaselement einen Scheibenverbund aufweist, der an seinem Randabschnitt von einem Rahmenprofil aufgenommen ist, wobei die Türbaugruppe in Schließstellung über wenigstens eine Dichtung am Gerätekorpus angeordnet ist, wobei die Dichtung eine Außenwand, eine Mittelwand sowie eine Innenwand aufweist, wobei die Außenwand sowie die Mittelwand der Dichtung einen Aufnahmeraum aufweisen, in dem ein Magnet angeordnet ist, wobei zwischen dem Gerätekorpus und dem Rahmenprofil sich ein Zwischenraum bildet, sich dadurch vorteilhafterweise auszeichnet, dass der Zwischenraum von wenigstens einem Profilelement abdichtend verschlossen ist, dass der Zwischenraum von dem Profilelement gegenüber dem Innenraum des Kühl- und / oder Gefriergerätes abdichtend verschlossen ist, dass die Distanz zwischen dem Profilelement und der Dichtung in etwa dem Abstand zwischen dem Rahmenprofil und dem Gerätekorpus entspricht, und dass das Profilelement aus einem weichelastischen Werkstoff mit einer Shore-Härte A von etwa 10 bis 90, vorzugsweise von etwa 30 bis 80, hergestellt ist. Durch dieses erfindungsgemäße Kühl- und / oder Gefriergerät wird vorteilhafterweise erreicht, dass im kritischen Bereich zwischen dem Gerätekorpus und dem Rahmenprofil und / oder dem Randabschnitt des Scheibenverbundes ein zusätzlicher Hohlraum geschaffen ist, der thermisch isolierend wirkt und der somit die Energieeffizienz derartiger Kühl- und / oder Gefriergeräte immanent verbessert. Die Anordnung eines den Zwischenraum abdichtenden Profilelementes führt dazu, dass einerseits der Wärmeeintrag aus der Umgebung in den Innenraum des Kühl- und / oder Gefriergerätes erschwert bzw. reduziert ist und dass andererseits die isolierende Wirkung des Kühl- und / oder Gefriergerätes verbessert ist, da die im Innenraum befindliche, gekühlte Luft nicht aus dem Kühl- und / oder Gefriergerät in den umgebenden Raum austreten kann.

Vorteilhaft bei dem erfindungsgemäßen Kühl- und / oder Gefriergerät wird gesehen, dass das Profilelement am Rahmenprofil angeordnet ist. Hierdurch kann vorteilhafterweise eine Türbaugruppe für Kühl- und / oder Gefriergeräte zur Verfügung gestellt werden, die bereits im Herstellungsprozess ein derartiges Profilelement aufweist.

Ein weiterer Vorteil des erfindungsgemäßen Kühl- und / oder Gefriergerätes wird darin gesehen, dass das Profilelement am Gerätekorpus angeordnet ist. Durch diese vorteilhafte Ausgestaltung ist es beispielsweise möglich, in bereits bestehende Kühl- und / oder Gefriergeräte derartige Profilelemente nachträglich einzubringen, um die Energieeffizienz entsprechend positiv zu gestalten.

Es hat sich weiterhin als vorteilhaft herausgestellt bei dem erfindungsgemäßen Kühl- und / oder Gefriergerät, dass das Profilelement stoffschlüssig am Rahmenprofil und / oder am Gerätekorpus angeordnet ist. Hierdurch ist einerseits eine wirtschaftliche Herstellung beispielsweise des Rahmenprofils möglich, während andererseits eine nachträgliche Anbringung des Profilelementes am Gerätekorpus über an sich bekanntes Verkleben bzw. Verschweißen kostengünstig realisierbar ist.

Weiterhin hat sich bei dem erfindungsgemäßen Kühl- und / oder Gefriergerät als vorteilhaft herausgestellt, dass das Profilelement formschlüssig am Rahmenprofil und / oder am Gerätekorpus angeordnet ist. Dies ermöglicht eine kostengünstige Herstellung beispielsweise des Rahmenprofils und eine nachträgliche Anbringung des Profilelementes am Gerätekorpus über an sich bekanntes Verkleben bzw. Verschweißen ist ebenfalls realisierbar.

Bei dem erfindungsgemäßen Kühl- und / oder Gefriergerät ist es weiterhin vorteilhaft, dass das Profilelement kraftschlüssig am Rahmenprofil und / oder am Gerätekorpus angeordnet ist. Durch diese vorteilhafte Ausgestaltung können die Gerätekorpusse bzw. die Türbaugruppen für das Kühl- und / oder Gefriergerät separat hergestellt sowie montiert werden.

In der Endmontage ist es dann einfach und kostengünstig möglich, das Profilelement über an sich bekannte Rast-, Steck-, Schnapp- und dergleichen Verbindungen mit dem Rahmenprofil und / oder dem Gerätekorpus zu verbinden, um so die Energieeffizienz des Kühl- und / oder Gefriergerätes zu optimieren.

In einer vorteilhaften Ausgestaltung eines nicht erfindungsgemäßen Kühl- und /oder Gefriergerätes weist das Profilelement wenigstens eine Basis und ein von dieser wegragendes Dichtelement auf. Vorteilhaft bei diesem Ausführungsbeispiel wird gesehen, dass das Profilelement einerseits stoffschlüssig bzw. kraftschlüssig am Rahmenprofil und / oder am Gerätekorpus anbringbar ist und so die Energieeffizienz verbessert, während andererseits insbesondere durch das Dichtelement fertigungsbedingte sowie einbaubedingte Toleranzen zwischen der Türbaugruppe und dem Gerätekorpus mit ausgeglichen werden können.

Dabei hat es sich in diesem nicht erfindungsgemäßen Gerät als genauso vorteilhaft erwiesen, dass das Profilelement wenigstens ein einen Hohlraum bildendes Dichtelement aufweist. Dies führt neben dem Ausgleich der fertigungsbedingten sowie der einbaubedingten Toleranzen zwischen der Türbaugruppe und dem Gerätekorpus auch zu einer besseren Abdichtung des Zwischenraumes zwischen dem Gerätekorpus und dem Rahmenprofil und / oder dem Randabschnitt des Scheibenverbundes, da hier eine zusätzliche in sich geschlossene, den Zwischenraum isolierende Hohlkammer gebildet ist, so dass ein möglicher Wärmeeintrag aus der Umgebung in sowie ein Kälteaustrag aus dem Innenraum des Kühl- und / oder Gefriergerätes wirksam verhindert ist.

Es hat sich insbesondere als vorteilhaft herausgestellt, dass das Profilelement aus einem polymeren Werkstoff hergestellt ist wie Polyvinylchlorid (PVC); Polyolefin, wie Polypropylen (PP) oder Polyethylen (PE); einem styrolbasiertem Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol (PPY);Polytetrafluorethylen (PTFE); Polyurethan (PUR); Polyvinylalkohol (PVA); Polyvinylacetat (PVAC); Polyvinylidenchlorid (PVDC) sowie Mischungen aus wenigstens zwei diesen Materialien. Hierdurch kann das Profilelement im an sich bekannten Extrusions- bzw. Koextrusionsverfahren kostengünstig und in der entsprechenden Farbenvielfalt hergestellt werden.

Ein weiterer Vorteil des erfindungsgemäßen Kühl- und / oder Gefriergerätes besteht darin, dass das Profilelement aus einem weichelastischen Werkstoff mit einer Shore-Härte A von etwa 10 bis 90, vorzugsweise von etwa 30 bis 80, hergestellt ist.

Dabei hat es sich insbesondere als vorteilhaft herausaestellt. dass das Profilelement aus einem weichelastischen, polymeren Werkstoff hergestellt ist, wie eine gehärte Elastomerzusammensetzung, die eine Mischung umfasst, die mindestens einen natürlichen Kautschuk, Polyisoprenkautschuk, Poly(Styrol-co-butadien)-Kautschuk (SBR), Polybutadienkautschuk (BR), Poly(Isopren-cobutadien)-Kautschuk (IBR), Styrol-Isopren-Butadien-Kautschuk (SIBR), Ethylen-Propylen-Kautschuk (EPR), Ethylen-Propylen-Dien-Kautschuk (EPDM), Polysulfid, Isobutylen/Cyclopentadien-Copolymerkautschuk, Isobutylen/Methylcyclopentadien-Copolymer-Kautschuk, Nitrilkautschuk, Propylenoxidpolymer, sternverzweigten Butylkautschuk und halogenierten, sternverzweigten Butylkautschuk, bromierten Butylkautschuk, chlorierten Butylkautschuk, sternverzweigten Polyisobutylenkautschuk, sternverzweigten, bromierten Butyl(Polyisobutylen/Isopren-Copolymer)-Kautschuk, Poly(Isobutylen-co-p-methylstyrol) und halogeniertes Poly(lsobutylen-co-p-methylstyrol), halogeniertes Poly(Isobutylen-co-isopren-co-p-methylstyrol), Poly(Isobutylen-co-isopren-co-styrol), halogeniertes Poly(Isobutylen-co-isopren-co-styrol), Poly(Isobutylen-co-isopren-co-a-methylstyrol), halogeniertes Poly(Isobutylen-co-isopren-co-a-methylstyrol) oder Mischungen davon enthält.

Es liegt weiter im Rahmen der Erfindung, dass das Profilelement hergestellt ist aus einem polymerem Werkstoff ausgewählt aus der Gruppe der Thermoplastischen Elastomere bspw. auf Olefinbasis und/oder auf Urethanbasis, der vernetzten thermoplastischen Elastomere auf Olefinbasis, der Thermoplastischen Copolyester, der Styrol-Blockcopolymere (SBS, SEBS, SEPS, SEEPS und MBS) sowie der Thermoplastischen Copolyamide, der weihmacherhaltigen Werkstoffe, bevorzugt Polypropylen, Acrylnitril-Butadien-Styrol-Copolymerisat, Polycarbonat, Polyvinylchlorid, Polymethylmethacrylat, Polyethylenterephthalat, Polyurethan und dgl., sowie aus Mischungen dieser Werkstoffe.

Neben den vorteilhaften Herstellungskosten für das Profilelement wird hierdurch auch eine optimale Abdichtung des Zwischenraums zwischen dem Gerätekorpus und dem Rahmenprofil erzielt. Außerdem können hierdurch insbesondere die fertigungsbedingten sowie einbaubedingten Toleranzen zwischen dem Gerätekorpus und der Türbaugruppe auch bei großdimensionierten Kühl- und / oder Gefriergeräten über lange Zeiträume ausgeglichen werden.

Dabei hat es sich als weiterhin vorteilhaft herausgestellt bei dem Kühl- und / oder Gefriergerät, dass das Profilelement eine Wandstärke von etwa 0,1 bis 5,0 mm, vorzugsweise von 0,2 bis 3,0 mm, aufweist. Durch die unterschiedliche Geometrie der Wandstärke des Profilelementes können zum einen deren Herstellungskosten optimiert werden, während andererseits die insbesondere abdichtende Wirkung des Zwischenraums zwischen dem Gerätekorpus und dem Rahmenprofil optimal gestaltbar ist Ein weiterer Vorteil des erfindungsgemäßen Kühl- und / oder Gefriergerätes besteht darin, dass das Profilelement als eigenständiges, von der Dichtung unabhängiges Bauteil ausgebildet, sowie von der Dichtung beabstandet, angeordnet ist.

Erfindungsgemäß beträgt der Abstand bzw. die Distanz zwischen dem Profilelement und der Dichtung in etwa dem Abstand zwischen dem Rahmenprofil und dem Gerätekorpus.

So kann eine energieeffiziente Abdichtung des Innenraums des erfindungsgemäßen Kühl- und / oder Gefriergerätes erreicht werden, da der Zwischenraum eine thermische Schwachstelle darstellt, die bei dem erfindungsgemäßen Kühl- und / oder Gefriergerät nun nicht mehr existiert.

Das Kühl- und / oder Gefriergerät zeichnet sich weiterhin dadurch aus, dass das Profilelement über wenigstens eine Hohlkammer des Rahmenprofils vom Randabschnitt des Scheibenverbundes beabstandet angeordnet ist. Auch diese vorteilhafte Ausgestaltung des Kühl- und / oder Gefriergerätes führt dazu, dass die Energieeffizienz des Gerätes optimiert ist und insbesondere die thermische Schwachstelle im Randabschnitt des Scheibenverbundes durch die zusätzliche Hohlkammer und das Profilelement als solche nahezu eliminiert ist. Diese Hohlkammer kann dabei stoffschlüssig bzw. einstückig am Rahmenprofil angeordnet sein und unterschiedliche Wandstärken gegenüber dem Rahmenprofil aufweisen.

Ein weiterer Vorteil dieser Ausgestaltungsform besteht darin, dass die Hohlkammer des Rahmenprofils auch dazu verwendbar bzw. einsetzbar ist, um ein weiteres Profilelement über an sich bekannte Rast-, Schnapp- bzw. Steckelemente in dieser kraftschlüssig und/oder formschlüssig und/oder stoffschlüssig, durch bspw. eine Öffnung in Profillängsrichtung, sowie die Hohlkammer verschließend, aufzunehmen.

Die Erfindung soll nun an diesen nicht einschränkenden Ausführungsbeispielen näher beschrieben werden.

Es zeigen:
- Fig. 1: eine perspektivische Ansicht eines Kühl- und / oder Gefriergerätes mit einer Türbaugruppe in schematischer Darstellung
- Fig. 2: Schnittansicht eines Teiles des Kühl- und / oder Gefriergerätes aus Fig. 1 entlang einer Linie A-A
- Fig. 3: Schnittansicht eines Teiles eines nicht erfindungsgemäßen Kühl- und / oder Gefriergerätes aus Fig. 1 entlang einer Linie A-A
- Fig. 4: Schnittansicht eines Teiles eines nicht erfindungsgemäßen Kühl- und / oder Gefriergerätes aus Fig. 1 entlang einer Linie A-A
- Fig. 5: Schnittansicht eines Teiles eines nicht erfindungsgemäßen Kühl- und / oder Gefriergerätes aus Fig. 1 entlang einer Linie A-A

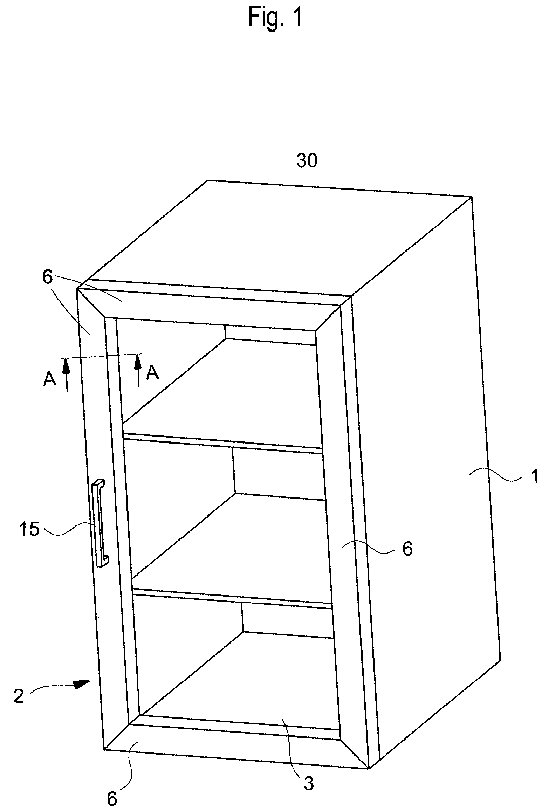

Das in der Fig. 1 dargestellte erfindungsgemäße Kühl- und / oder Gefriergerät zeigt einen im Wesentlichen kubischen, das heißt rechteckigen bzw. quadratischen Gerätekorpus 1, der frontseitig an seiner Sichtseite offen ausgebildet und durch eine Türbaugruppe 2 verschließbar ist. Die Türbaugruppe 2 umfasst ein Glaselement 3, welches an seinem hier nicht sichtbaren Randabschnitt 5 von einem Rahmenprofil 6 aufgenommen ist.

Das erfindungsgemäße Kühl- und / oder Gefriergerät gemäß der Fig. 1 ist in Schließstellung gezeichnet, wobei die Türbaugruppe 2 über eine Dichtung verfügt, welche in dieser Darstellung nicht erkennbar ist, und so am Gerätekorpus 1 angeordnet ist.

Die Türbaugruppe 2 ist über eine an sich bekannte vertikale Türschwenkachse schwenkbar am Gerätekorpus 1 gelagert, so dass sie unter Zuhilfenahme des Griffes 15 von der dargestellten Schließstellung in eine geöffnete Stellung überführbar ist um die in der Fig. 1 auf der rechten Seite der Türbaugruppe 2 liegende Schwenkachse.

Das in der Türbaugruppe 2 angeordnete Glaselement 3 ist in diesem Ausführungsbeispiel transparent ausgebildet, so dass der Innenraum des erfindungsgemäßen Kühl- und / oder Gefriergerätes von außen in der dargestellten Schließstellung erkennbar ist.

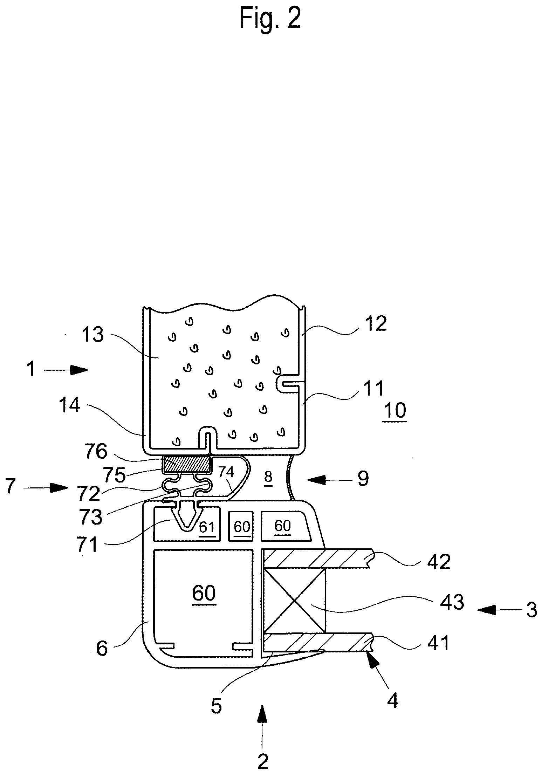

In Fig. 2 ist eine Schnittansicht eines Teiles des erfindungsgemäßen Kühl- und / oder Gefriergerätes aus Fig. 1 entlang der Linie A-A dargestellt.

Das erfindungsgemäße Kühl- und / oder Gefriergerät umfasst einen Gerätekorpus 1 sowie eine Türbaugruppe 2 mit einem Glaselement 3. Das Glaselement 3 weist in diesem Ausführungsbeispiel einen Scheibenverbund 4 auf, der an seinem Randabschnitt 5 von einem Rahmenprofil 6 aufgenommen ist.

Der das Glaselement 3 bildende Scheibenverbund 4 weist in diesem Ausführungsbeispiel eine äußere Scheibe 41, eine innere Scheibe 42 sowie einen dazwischen positionierten Abstandshalter 43 auf. Dabei ist die innere Scheibe 42 zum Innenraum 10 des Kühl- und / oder Gefriergerätes positioniert, während die äußere Scheibe 41 in den Raum weist ist, in dem das Kühl- und / oder Gefriergerät aufgestellt ist.

Das Rahmenprofil 6 ist in diesem Ausführungsbeispiel so ausgebildet, dass es eine dem Randabschnitt 5 des Scheibenverbundes 4 gegenüberliegend angeordnete etwa U-förmige Aufnahme aufweist, die den Randabschnitt 5 des Scheibenverbundes 4 in sich aufnimmt, der wiederum im Allgemeinen über eine stoffschlüssige Verbindung wie beispielsweise Verkleben im Rahmenprofil 6 fixiert ist. Das Rahmenprofil 6 ist in diesem Ausführungsbeispiel aus dem polymeren Werkstoff Polyvinylchlorid (PVC) hergestellt und als Hohlprofil mit den Hohlkammern 60, 61 ausgebildet.

Das Rahmenprofil 6 weist in einer Hohlkammer 61 eine Dichtung 7 auf, welche über das Rastelement 71 in der Hohlkammer 61 des Rahmenprofils 6 formschlüssig angeordnet ist. Die Türbaugruppe 2 ist hier in Schließstellung des Kühl- und / oder Gefriergerätes dargestellt und über die Dichtung 7 am Gerätekorpus 1 angeordnet.

Die Dichtung 7 weist in diesem Ausführungsbeispiel eine Außenwand 72, eine

Mittelwand 73 sowie eine Innenwand 74 auf, die aus einem weichelastischen Werkstoff mit einer Shore-Härte A von 80 hergestellt sind.

Die Außenwand 72 sowie die Mittelwand 73 der Dichtung 7 weisen einen Aufnahmeraum 75 auf, in dem ein Magnet 76 angeordnet ist.

Zwischen dem Rahmenprofil 6 und dem Gerätekorpus 1 ist ein Zwischenraum 8 gebildet, welcher von dem Profilelement 9 gegenüber dem Innenraum 10 des Kühl- und / oder Gefriergerätes abdichtend verschlossen ist.

Das Profilelement 9 ist in diesem Ausführungsbeispiel stoffschlüssig am Rahmenprofil 6 angeordnet und besteht ebenfalls aus einem weichelastischen Werkstoff mit einer Shore-Härte A 65.

Das Profilelement 9 weist in diesem Ausführungsbeispiel eine Wandstärke von etwa 0,6 mm auf und ist leicht gebogen in einem Radius im Zwischenraum 8 angeordnet.

Die Distanz zwischen dem Profilelement 9 und der Dichtung 7 ist in diesem Ausführungsbeispiel etwa gleich dem Abstand zwischen dem Rahmenprofil 6 und dem Gerätekorpus 1.

Das Profilelement 9 ist in diesem Ausführungsbeispiel aus dem polymeren Werkstoff Polyvinylchlorid (weich) hergestellt und wird als weichelastischer Werkstoff zusammen mit dem polymeren Werkstoff des Rahmenprofils 6 im an sich bekannten Verfahren der Coextrusion kostengünstig und wirtschaftlich hergestellt.

Das Kühl- und / oder Gefriergerät umfasst einen Gerätekorpus 1, der in diesem Ausführungsbeispiel aus einem Innenkorpus 12 sowie einem davon beabstandet angeordneten Außenkorpus 14 gebildet ist, die aus einem metallischen Werkstoff hergestellt sind.

An den freien Enden des Innenkorpus 12 sowie des Außenkorpus 14 ist ein Rahmenprofil 11 kraftschlüssig angeordnet, welches in diesem Ausführungsbeispiel aus dem polymeren Werkstoff hergestellt ist. Das Rahmenprofil 11 ist in diesem Ausführungsbeispiel etwa L-förmig ausgebildet, wobei in dem Innenraum sowie zwischen dem Innenkorpus 12 sowie dem Außenkorpus 14 des Gerätekorpus 1 ein Isolationselement 13 angeordnet ist, welches als Schaumstoff mit einer Dichte von etwa 10 bis 60 kg/ m³ aus dem Werkstoff Polyurethan gebildet ist.

In diesem Ausführungsbeispiel ist das Profilelement 9 über wenigstens eine

Hohlkammer 60 des Rahmenprofils 6 vom Randabschnitt 5 des Scheibenverbundes 4 beabstandet angeordnet. Durch diese vorteilhafte Ausgestaltung kann die Energieeffizienz des erfindungsgemäßen Kühl- und / oder Gefriergerätes weiter optimiert werden, da ein möglicher Wärmeeintrag in den Innenraum 10 des Kühl- und / oder Gefriergerätes einerseits durch die an sich bekannte Dichtung 7, aber auch durch eine zusätzlich isolierende Hohlkammer, die durch den vom Profilelement 9 abgedichteten Zwischenraum 8 entsteht, verhindert wird. Ein weiterer Vorteil dieses Ausführungsbeispiels wird darin gesehen, dass insbesondere der im Scheibenverbund 4 angeordnete Abstandshalter 43, der beispielsweise aus metallischem Werkstoff hergestellt ist, eine thermische Schwachstelle darstellt, welche jedoch vorteilhafterweise durch die am Rahmenprofil 6 am Randabschnitt 5 des Scheibenverbundes 4 angeordnete, einstückig verbundene, Hohlkammer 60 nochmals zusätzlich thermisch isoliert ist.

Es liegt jedoch auch im Rahmen der Erfindung, dass in dem zwischen dem Gerätekorpus 1 und dem Rahmenprofil 6 gebildeten Zwischenraum 8 noch ein weiteres Profilelement 9 anordenbar ist, welches beispielsweise am Rahmenprofil 11 stoffschlüssig angeordnet ist und den Zwischenraum 8 nochmals zusätzlich abdichtend teilt in eine weitere thermisch wirksame Hohlkammer.

Somit führt die Anordnung eines den Zwischenraum 8 zwischen dem Gerätekorpus 1 und dem Rahmenprofil 6 abdichtenden Profilelementes 9 dazu, dass sowohl der mögliche Wärmeeintrag aus der Umgebung in den Innenraum 10 des Kühl- und / oder Gefriergerätes stark reduziert ist und dass andererseits die isolierende Wirkung des Kühl-und / oder Gefriergerätes dahingehend verbessert ist, da die im Innenraum 10 befindliche gekühlte Luft nicht über den an sich kritischen Bereich zwischen dem Gerätekorpus 1 und dem Rahmenprofil 6 in die Umgebung austreten kann.

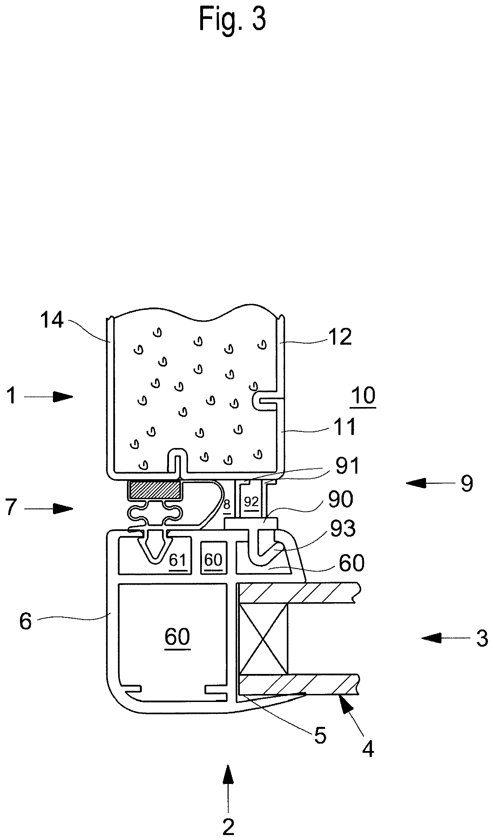

In der Fig. 3 ist eine weitere Schnittansicht eines Teils eines nicht erfindungsgemäßen Kühl-und / oder Gefriergerätes aus Fig. 1 entlang einer Linie A-A dargestellt.

Das nicht erfindungsgemäße Kühl- und / oder Gefriergerät umfasst einen Gerätekorpus 1 sowie eine Türbaugruppe 2 mit einem Glaselement 3, wobei das Glaselement 3 einen Scheibenverbund 4 aufweist. Der Randabschnitt 5 des Scheibenverbundes 4 ist vom Rahmenprofil 6 aufgenommen, wobei die Türbaugruppe 2 hier in Schließstellung über die Dichtung 7 am Gerätekorpus 1 angeordnet ist. Zwischen dem Gerätekorpus 1 und dem Rahmenprofil 6 bildet sich somit ein Zwischenraum 8.

Alle weiteren Details des nicht erfindungsgemäßen Kühl- und / oder Gefriergerätes entsprechen bereits denen in Fig.2 beschriebenen und sollen an dieser Stelle nicht wiederholt werden.

Der zwischen dem Gerätekorpus 1 und dem Rahmenprofil 6 sowie der Dichtung 7 gebildete Zwischenraum 8 ist in diesem Ausführungsbeispiel vom Profilelement 9 abdichtend verschlossen. Das Profilelement 9 ist in diesem Ausführungsbeispiel so ausgebildet, dass es eine Basis 90 aufweist, von der zwei Dichtelemente 91 wegragen, die mit ihren freien Enden am Rahmenprofil 11 des Gerätekorpus 1 anliegen.

Die Basis 90 des Profilelementes 9 weist in diesem Ausführungsbeispiel ein Rastelement 93 auf, welches über eine Öffnung in der Hohlkammer 60 des Rahmenprofils 6 formschlüssig das Profilelement 9 fixiert. Die Basis 90 sowie das Rastelement 93 des Profilelementes 9 sind in diesem Ausführungsbeispiel aus dem polymeren Werkstoff ABS hergestellt und weisen eine Shore-Härte D von 80 auf.

Die an der Basis 90 des Profilelementes 9 angeordneten Dichtelemente 91 sind mit dieser stoffschlüssig verbunden und aus dem Styrol-Blockcopolymer SEBS hergestellt.

Das Profilelement 9 ist in diesem Ausführungsbeispiel so ausgebildet, dass die Basis 90 über das Rastelement 93 am Rahmenprofil 6 vollflächig anliegt und dass von der Basis 90 des Profilelementes 9 zwei Dichtelemente 91 voneinander beabstandet wegragen.

Durch diese vorteilhafte Ausgestaltung wird durch das der Dichtung 7 gegenüberliegende Dichtelement 91 des Profilelementes 9 der Zwischenraum 8 abdichtend verschlossen.

Ein weiterer Vorteil des nicht erfindungsgemäßen Kühl- und / oder Gefriergerätes besteht darin, dass das dem Innenraum 10 des nicht erfindungsgemäßen Kühl- und / oder Gefriergerätes gegenüberliegend angeordnete Dichtelement 91 des Profilelementes 9 für eine zusätzliche Abdichtung des Zwischenraums 8 sorgt, so dass zwischen den beabstandet angeordneten Dichtelementen 91 des Profilelementes 9 ein zusätzlicher thermisch isolierter Hohlraum 92 entsteht, der die Energieeffizienz des nicht erfindungsgemäßen Kühl- und / oder Gefriergerätes noch weiter optimiert.

Das den Zwischenraum 8 abdichtende Profilelement 9 ist in diesem Ausführungsbeispiel aus einem polymeren Werkstoff hergestellt, verbindet somit den polymeren Werkstoff des Rahmenprofils 6 mit dem polymeren Werkstoff des Rahmenprofils 11 und führt somit zu einer besseren thermischen Isolierung des Innenraums 10 des nicht erfindungsgemäßen Kühl- und / oder Gefriergerätes.

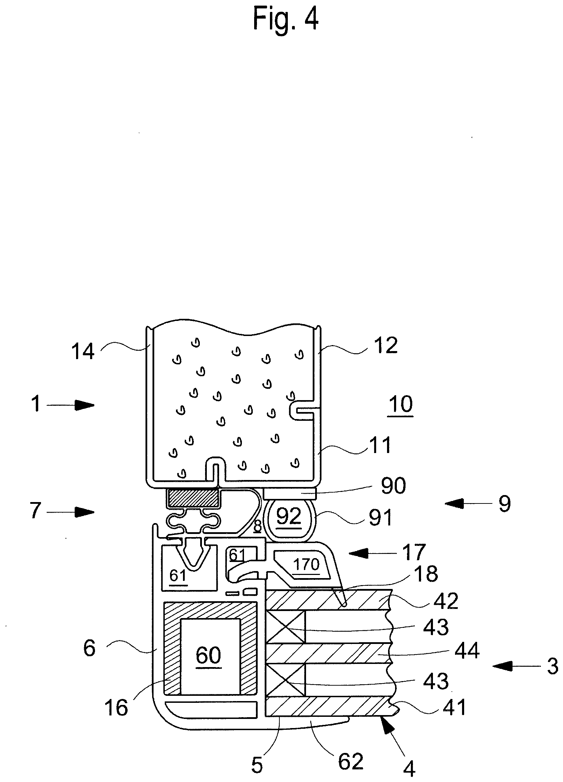

In der Fig. 4 ist eine weitere Schnittansicht eines Teils eines nicht erfindungsgemäßen Kühl- und / oder Gefriergerätes aus Fig. 1 entlang einer Linie A-A dargestellt.

Das nicht erfindungsgemäße Kühl- und / oder Gefriergerät umfasst einen Gerätekorpus 1 sowie eine Türbaugruppe 2 mit einem Glaselement 3, wobei das Glaselement 3 einen Scheibenverbund 4 aufweist, der an seinem Randabschnitt 5 vom Rahmenprofil 6 aufgenommen ist.

Der Scheibenverbund 4 weist in diesem Ausführungsbeispiel eine der Umgebung zugewandte äußere Scheibe 41, eine dem Innenraum 10 zugewandte innere Scheibe 42 sowie eine dazwischen angeordnete mittlere Scheibe 44 auf. Zwischen der äußeren Scheibe 41, der mittleren Scheibe 44 sowie der inneren Scheibe 42 sind Abstandshalter 43 angeordnet.

Das Rahmenprofil 6 ist in diesem Ausführungsbeispiel so ausgebildet, dass es einen parallel zum Scheibenverbund 4 angeordneten Steg 62 aufweist, der den Randabschnitt 5 des Scheibenverbundes 4 aufnimmt, wobei der Randabschnitt 5 des Scheibenverbundes 4 am Steg 62 über an sich bekannte Klebstoffe fixiert ist.

Das Rahmenprofil 6 ist in diesem Ausführungsbeispiel weiterhin so ausgebildet, dass es eine gegenüber dem Randabschnitt 5 des Scheibenverbundes 4 angeordnete Hohlkammer 60 aufweist, in der ein Armierungselement 16 angeordnet ist. Dieses Armierungselement 16 ist ebenfalls aus einem polymeren Werkstoff hergestellt, aus einem Polyamid (PA), welches zusätzlich noch Verstärkungselemente wie an sich bekannte Glasfasern aufweist. Das Armierungselement 16 im Rahmenprofil 6 führt dazu, dass die Stabilität sowie die Steifigkeit der Türbaugruppe 2 noch einmal verbessert ist.

Das Rahmenprofil 6, welches als sog. Hohlkammerprofil ausgebildet ist, verfügt noch über zwei gegenüber der Hohlkammer 60 angeordnete Hohlkammern 61.

In der dem Randabschnitt 5 des Scheibenverbundes 4 gegenüberliegend angeordneten Hohlkammer 61 ist eine Glasleiste 17 angeordnet, welche kraftschlüssig in einer Öffnung der Hohlkammer 61 des Rahmenprofils 6 eingefügt ist.

Die Glasleiste 17 ist in diesem Ausführungsbeispiel so ausgebildet, dass sie eine Hohlkammer 170 aufweist, wobei an der dem Randabschnitt 5 des Scheibenverbundes 4 gegenüberliegend angeordneten Seite der Glasleiste 17 ein Dichtelement 18 angeordnet ist, welches fertigungsbedingte Toleranzen des Scheibenverbundes 4 ausgleicht.

Die Türbaugruppe 2 ist hier in Schließstellung dargestellt und über die Dichtung 7 am Gerätekorpus 1 angeordnet.

Zwischen dem Gerätekorpus 1 und dem Rahmenprofil 6 sowie dem Randabschnitt 5 des Scheibenverbundes 4 ist ein Zwischenraum 8 gebildet. Dieser Zwischenraum 8 ist vom Profilelement 9 abdichtend verschlossen, welches stoffschlüssig am Rahmenprofil 11 des Gehäusekorpus 1 über an sich bekannte Verklebung angeordnet ist.

Das Profilelement 9 weist in diesem Ausführungsbeispiel eine Basis 90 und ein von dieser wegragendes Dichtelement 91 auf.

Das Dichtelement 91 des Profilelementes 9 ist in diesem Ausführungsbeispiel so ausgebildet, dass es einen Hohlraum 92 in etwa kreisförmig umschließt.

Die Basis 90 des Profilelementes 9 ist aus dem polymeren Werkstoff Polypropylen (PP) hergestellt und das Dichtelement 91 des Profilelementes 9 aus dem weichelastischen Werkstoff Themoplastisches Elastomer auf Olefinbasis mit einer Shore-Härte A 45.

Die Basis 90 des Profilelementes 9 weist eine Wandstärke von etwa 1,0 mm auf, während das Dichtelement 91 des Profilelementes 9 eine Wanddicke von etwa 0,25 mm aufweist. Das Profilelement 9 in diesem Ausführungsbeispiel ist so ausgebildet, dass es sowohl bei neu herzustellenden, nicht erfindungsgemäßen Kühl- und / oder Gefriergeräten eingesetzt werden kann, aber auch zur Optimierung bzw. Sanierung bestehender, nicht erfindungsgemäßer Kühl- und / oder Gefriergeräte nachträglich problemlos einbringbar ist. Durch die vorteilhafte Ausgestaltung des Rahmenprofils 6 mit der kraftschlüssig angeordneten Glasleiste 17 sowie dem am Rahmenprofil 11 des Gerätekorpus 1 angeordnetem Profilelement 9 kann insbesondere die Energieeffizienz des nicht erfindungsgemäßen Kühl- und / oder Gefriergerätes wesentlich optimiert werden, da einerseits der durch das Profilelement 9 abgedichtete Zwischenraum 8 eine zusätzliche Isolierung darstellt, welche zusätzlich verstärkt wird durch den von dem Dichtelement 91 des Profilelementes 9 gebildeten Hohlraum 92.

Weiterhin vorteilhaft wird gesehen, dass der komplexe Scheibenverbund 4 aus der äußeren Scheibe 41, der mittleren Scheibe 44, der inneren Scheibe 42 sowie den Abstandshaltern 43, welche als thermische Schwachstelle wirken, durch die Hohlkammer 170 der Glasleiste 17 nochmals zusätzlich thermisch isoliert ist.

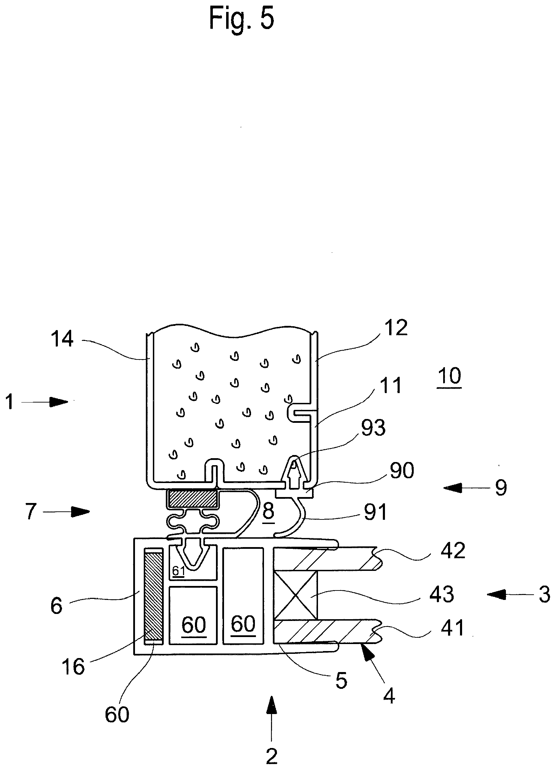

In der Fig. 5 ist eine weitere Schnittansicht eines Teils eines nicht erfindungsgemäßen Kühl- und / oder Gefriergerätes aus Fig. 1 entlang einer Linie A-A dargestellt.

Das nicht erfindungsgemäße Kühl- und / oder Gefriergerät umfasst einen Gerätekorpus 1 sowie eine Türbaugruppe 2 mit einem Glaselement 3. Das Glaselement 3 weist in diesem Ausführungsbeispiel einen Scheibenverbund 4 auf, der durch eine äußere Scheibe 41, eine dem Innenraum 10 des nicht erfindungsgemäßen Kühl- und / oder Gefriergerätes zugwandte innere Scheibe 42 sowie einen dazwischen angeordneten Abstandshalter 43 gebildet ist. Der Randabschnitt 5 des Scheibenverbundes 4 ist von einem Rahmenprofil 6 aufgenommen, welches eine gegenüber dem Randabschnitt 5 des Scheibenverbundes 4 angeordnete etwa U-förmige Aufnahme aufweist. Der Randabschnitt 5 des Scheibenverbundes 4 ist in der U-förmigen Aufnahme des Rahmenprofils 6 stoffschlüssig über an sich bekannte Klebstoffe fixiert.

Das Rahmenprofil 6 weist in diesem Ausführungsbeispiel dem Randabschnitt 5 des Scheibenverbundes 4 gegenüberliegend angeordnete Hohlkammern 60 auf, wobei in einer Hohlkammer 60 ein Armierungselement 16 kraftschlüssig angeordnet ist. Das Armierungselement 16 in diesem Ausführungsbeispiel ist aus einem metallischen Werkstoff wie beispielsweise Aluminium hergestellt und erhöht die Steifigkeit der Türbaugruppe 2. Das Rahmenprofil 6 weist weiterhin eine Hohlkammer 61 auf, in der die Dichtung 7 formschlüssig angeordnet ist.

Die Türbaugruppe 2 ist hier in Schließstellung über die Dichtung 7 am Gerätekorpus 1 angeordnet. Zwischen dem Gerätekorpus 1 und dem Rahmenprofil 6 ist ein Zwischenraum 8 gebildet, der vom Profilelement 9 gegenüber dem Innenraum 10 des nicht erfindungsgemäßen Kühl- und / oder Gefriergerätes abdichtend verschlossen ist.

Das Profilelement 9 ist in diesem Ausführungsbeispiel formschlüssig über das Rastelement 93 im Rahmenprofil 11 des Gerätekorpus 1 angeordnet. Das Profilelement 9 weist eine Basis 90 sowie ein von dieser wegragendes Dichtelement 91 auf, welches etwa halbkreisförmig ausgebildet ist, eine Wandstärke von etwa 0,6 mm aufweist und mit seinem der Basis 90 gegenüberliegenden freien Ende am Rahmenprofil 6 aufliegt.

Das Profilelement 9 ist aus polymerem Werkstoff hergestellt, wobei die Basis 90 und das Rastelement 93 aus einem harten polymeren Werkstoff wie PVC hergestellt sind, während das Dichtelement 91 aus einem weichelastischen PVC mit einer Shore-Härte A 75 hergestellt ist.

Durch das Profilelement 9 wird in dieser Position erreicht, dass der an sich kritische Bereich zwischen dem Gerätekorpus 1 und dem Rahmenprofil 6 bzw. dem Randabschnitt 5 des Scheibenverbundes 4 geschaffene Zwischenraum 8 abdichtend gegenüber dem Innenraum 10 des nicht erfindungsgemäßen Kühl- und / oder Gefriergerätes verschlossen ist, so dass der Zwischenraum 8 als zusätzliche, thermisch isolierende Hohlkammer die Energieeffizienz des nicht erfindungsgemäßen Kühl- und / oder Gefriergerätes immanent verbessert, da durch diese vorteilhafte Ausgestaltung der Wärmeeintrag aus der Umgebung in den Innenraum 10 des nicht erfindungsgemäßen Kühl- und / oder Gefriergerätes deutlich reduziert ist und dass andererseits die isolierende Wirkung des nicht erfindungsgemäßen Kühl- und / oder Gefriergerätes verbessert ist, da die im Innenraum 10 befindliche, gekühlte Luft nicht über diesen Bereich in den umgebenden Raum austreten kann.

Somit wird mit dem erfindungsgemäßen Kühl- und / oder Gefriergerät gemäß Figur 1 und Figur 2 eine verbesserte Energieeffizienz erreicht, die insbesondere den Stromverbrauch derartiger Kühl- und / oder Gefriergeräte reduziert.

## Patentansprüche

1. Kühl- und / oder Gefriergerät umfassend einen Gerätekorpus (1) sowie eine Türbaugruppe (2), mit einem Glaselement (3), wobei das Glaselement (3) einen Scheibenverbund (4) aufweist, der an seinem Randabschnitt (5) von einem Rahmenprofil (6) aufgenommen ist, wobei die Türbaugruppe (2) in Schließstellung über wenigstens eine Dichtung (7) am Gerätekorpus (1) angeordnet ist, wobei die Dichtung (7) eine Außenwand (72), eine Mittelwand (73) sowie eine Innenwand (74) aufweist, wobei die Außenwand (72) sowie die Mittelwand (73) der Dichtung (7) einen Aufnahmeraum (75) aufweisen, in dem ein Magnet (76) angeordnet ist, wobei zwischen dem Gerätekorpus (1) und dem Rahmenprofil (6) sich ein Zwischenraum (8) bildet, **dadurch gekennzeichnet, dass** der Zwischenraum (8) von wenigstens einem Profilelement (9) abdichtend verschlossen ist, dass der Zwischenraum (8) von dem Profilelement (9) gegenüber dem Innenraum (10) des Kühl- und / oder Gefriergerätes abdichtend verschlossen ist, dass die Distanz zwischen dem Profilelement (9) und der Dichtung (7) in etwa dem Abstand zwischen dem Rahmenprofil (6) und dem Gerätekorpus (1) entspricht, und dass das Profilelement (9) aus einem weichelastischen Werkstoff mit einer Shore-Härte A von etwa 10 bis 90, vorzugsweise von etwa 30 bis 80, hergestellt ist.

2. Kühl- und / oder Gefriergerät nach Anspruch 1, **dadurch gekennzeichnet, dass** das Profilelement (9) am Rahmenprofil (6) angeordnet ist.

3. Kühl- und / oder Gefriergerät nach Anspruch 1, **dadurch gekennzeichnet, dass** das Profilelement (9) am Gerätekorpus (1) angeordnet ist.

4. Kühl-und / oder Gefriergerät nach einem der vorhergehenden Ansprüche, **dadurch gekennzeichnet, dass** das Profilelement (9) stoffschlüssig am Rahmenprofil (6) und/oder am Gerätekorpus (1) angeordnet ist.

5. Kühl- und / oder Gefriergerät nach einem der vorhergehenden Ansprüche, **dadurch gekennzeichnet, dass** das Profilelement (9) formschlüssig am Rahmenprofil (6) und/oder am Gerätekorpus (1) angeordnet ist.

6. Kühl- und / oder Gefriergerät nach einem der vorhergehenden Ansprüche, **dadurch gekennzeichnet, dass** das Profilelement (9) kraftschlüssig am Rahmenprofil (6) und/oder am Gerätekorpus (1) angeordnet ist.

7. Kühl- und / oder Gefriergerät nach einem der vorhergehenden Ansprüche, **dadurch gekennzeichnet, dass** das Profilelement (9) aus einem polymeren Werkstoff hergestellt ist ausgewählt aus der Gruppe der wie Polyvinylchlorid (PVC); Polyolefin, wie Polypropylen (PP) oder Polyethylen (PE); einem styrolbasiertem Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol (PPY);Polytetrafluorethylen (PTFE); Polyurethan (PUR); Polyvinylalkohol (PVA); Polyvinylacetat (PVAC); Polyvinylidenchlorid (PVDC) sowie Mischungen aus wenigstens zwei dieser Materialien.

8. Kühl- und / oder Gefriergerät nach einem der vorhergehenden Ansprüche, **dadurch gekennzeichnet, dass** das Profilelement (9) eine Wandstärke von etwa 0,1 bis 5,0 mm, vorzugsweise 0,2 bis 3,0 mm, aufweist.

9. Kühl- und / oder Gefriergerät nach einem der vorhergehenden Ansprüche, **dadurch gekennzeichnet, dass** das Profilelement (9) über wenigstens eine Hohlkammer (60) des Rahmenprofils (6) vom Randabschnitt (5) des Scheibenverbundes (4) beabstandet angeordnet ist.

## Claims

1. A refrigerating and/or freezing device comprising a basic device structure (1) and a door assembly (2) having a glass element (3), wherein the glass element (3) comprises a laminated glass (4) which is accommodated by a frame profile (6) over its peripheral portion (5), wherein the door assembly (2), in the closed position, is arranged on the basic device structure (1) via at least one seal (7), wherein the seal (7) comprises an outer wall (72), a middle wall (73) and an inner wall (74), wherein the outer wall (72) and the middle wall (73) of the seal (7) have a receiving space (75) in which a magnet (76) is arranged, wherein an interspace (8) is formed between the basic device structure (1) and the frame profile (6), **characterised in that**
the interspace (8) is closed by at least one profile element (9) in a sealing manner, that the interspace (8) is closed with respect to the interior (10) of the refrigerating and/or freezing device with by the profile element (9) in a sealing manner, that the distance between the profile element (9) and the seal (7) corresponds approximately to the spacing between the frame profile (6) and the basic device structure (1), and that the profile element (9) is produced from a soft-elastic material with a Shore-A hardness of approximately 10 to 90, preferably of approximately 30 to 80.

2. A refrigerating and/or freezing device according to claim 1, **characterised in that** the profile element (9) is arranged on the frame profile (6).

3. A refrigerating and/or freezing device according to claim 1, **characterised in that** the profile element (9) is arranged on the basic device structure (1).

4. A refrigerating and/or freezing device according to one of the preceding claims, **characterised in that** the profile element (9) is arranged cohesively on the frame profile (6) and/or on the basic device structure (1).

5. A refrigerating and/or freezing device according to one of the preceding claims, **characterised in that** the profile element (9) is arranged interlockingly on the frame profile (6) and/or on the basic device structure (1).

6. A refrigerating and/or freezing device according to one of the preceding claims, **characterised in that** the profile element (9) is arranged non-positively on the frame profile (6) and/or on the basic device structure (1).

7. A refrigerating and/or freezing device according to one of the preceding claims, **characterised in that** the profile element (9) is produced from a polymer material selected from the group of such as polyvinylchloride (PVC); polyolefin, such as polypropylene (PP) or polyethylene (PE); a styrene-based polymer, such as polystyrene (PS) or styrene-butadiene copolymer with a predominant portion of styrene (SB) or acrylonitrile styrene acrylate copolymers (ASA) or acrylonitrile butadiene styrene copolymers (ABS) or styrene acrylonitrile (SAN); polybutylene terephthalate (PBT); polyethylene terephthalate (PET); polyoxymethylene (POM); polyamide (PA); polymethyl methacrylate (PMMA); polyphenylene oxide (PPO); polyetheretherketone (PEEK); polyphenylene sulfide (PPS); liquid crystal polymer (LCP); polyamide imides (PAI); polyvinylidene fluoride (PVDF); polyphenylsulfone (PPSU); polyaryletherketone (PAEK); polyacrylonitrile (PAN); polychlorotrifluoroethylene (PCTFE); polyetherketone (PEK); polyimide (PI); polyisobutene (PIB); polyphthalamide (PPA); polypyrrole (PPY); polytetrafluorethylene (PTFE); polyurethane (PUR); polyvinyl alcohol (PVA); polyvinyl acetate (PVAC); polyvinylidene chloride (PVDC) and mixtures of at least two of these materials.

8. A refrigerating and/or freezing device according to one of the preceding claims, **characterised in that** the profile element (9) has a wall thickness of approximately 0.1 to 5.0 mm, preferably 0.2 to 3.0 mm.

9. A refrigerating and/or freezing device according to one of the preceding claims, **characterised in that** the profile element (9) is arranged spaced apart from the peripheral portion (5) of the laminated structure (4) by means of at least one hollow chamber (60) of the frame profile (6).

## Revendications

1. Appareil de réfrigération et/ou de congélation comprenant un corps d'appareil (1) ainsi qu'un ensemble de porte (2), avec un élément en verre (3), l'élément en verre (3) présentant un composite de vitre (4) qui est logé sur sa section de bord (5) par un profilé de cadre (6), l'ensemble de porte (2) étant agencé en position de fermeture (5) sur le corps d'appareil (1) par l'intermédiaire d'au moins un joint d'étanchéité (7), le joint d'étanchéité (7) présentant une paroi extérieure (72), une paroi centrale (73) ainsi qu'une paroi intérieure (74), la paroi extérieure (72) ainsi que la paroi centrale (73) du joint d'étanchéité (7) présentant un espace de réception (75) dans lequel est agencé un aimant (76), un espace intermédiaire (8) se formant entre le corps d'appareil (1) et le profilé de cadre (6), **caractérisé en ce que** l'espace intermédiaire (8) est fermé de manière étanche par au moins un élément profilé (9), **en ce que** l'espace intermédiaire (8) est fermé de manière étanche par l'élément profilé (9) par rapport à l'espace intérieur (10) de l'appareil de réfrigération et/ou de congélation, **en ce que** la distance entre l'élément profilé (9) et le joint d'étanchéité (7) correspond approximativement à la distance entre le profilé de cadre (6) et le corps d'appareil (1), et **en ce que** l'élément profilé (9) est fabriqué à partir d'un matériau élastique souple ayant une dureté Shore A d'environ 10 à 90, de préférence d'environ 30 à 80.

2. Appareil de réfrigération et/ou de congélation selon la revendication 1, **caractérisé en ce que** l'élément profilé (9) est agencé sur le profilé de cadre (6).

3. Appareil de réfrigération et/ou de congélation selon la revendication 1, **caractérisé en ce que** l'élément profilé (9) est agencé sur le corps d'appareil (1).

4. Appareil de réfrigération et/ou de congélation selon l'une quelconque des revendications précédentes, **caractérisé en ce que** l'élément profilé (9) est agencé par liaison de matière sur le profilé de cadre (6) et/ou sur le corps d'appareil (1).

5. Appareil de réfrigération et/ou de congélation selon l'une quelconque des revendications précédentes, **caractérisé en ce que** l'élément profilé (9) est agencé par complémentarité de forme sur le profilé de cadre (6) et/ou sur le corps d'appareil (1).

6. Appareil de réfrigération et/ou de congélation selon l'une quelconque des revendications précédentes, **caractérisé en ce que** l'élément profilé (9) est agencé par adhérence sur le profilé de cadre (6) et/ou sur le corps d'appareil (1).

7. Appareil de réfrigération et/ou de congélation selon l'une quelconque des revendications précédentes, **caractérisé en ce que** l'élément profilé (9) est fabriqué à partir d'un matériau polymère choisi dans le groupe constitué par le chlorure de polyvinyle (PVC) ; les polyoléfines, comme le polypropylène (PP) ou le polyéthylène (PE) ; un polymère à base de styrène, comme le polystyrène (PS) ou le copolymère de styrène-butadiène à proportion de styrène prédominante (SB) ou les copolymères d'acrylonitrile-styrène-ester acrylique (ASA) ou les copolymères d'acrylonitrile-butadiène-styrène (ABS) ou le styrène-acrylonitrile (SAN) ; le polybutylène téréphtalate (PBT) ; le polyéthylène téréphtalate (PET) ; le polyoxyméthylène (POM) ; le polyamide (PA) ; le polyméthacrylate de méthyle (PMMA) ; l'oxyde de polyphénylène (PPO) ; la polyétheréthercétone (PEEK) ; le sulfure de polyphénylène (PPS) ; un polymère à cristaux liquides (LCP) ; les polyamideimides (PAI) ; le fluorure de polyvinylidène (PVDF) ; la polyphénylsulfone (PPSU) ; la polyaryléthercétone (PAEK) ; le polyacrylonitrile (PAN) ; le polychlorotrifluoroéthylène (PCTFE) ; la polyéthercétone (PEK) ; le polyimide (PI) ; le polyisobutène (PIB) ; le polyphtalamide (PPA) ; le polypyrrole (PPY) ; le polytétrafluoroéthylène (PTFE) ; le polyuréthane (PUR) ; l'alcool polyvinylique (PVA) ; l'acétate de polyvinyle (PVAC) ; le chlorure de polyvinylidène (PVDC) ainsi que les mélanges d'au moins deux de ces matériaux.

8. Appareil de réfrigération et/ou de congélation selon l'une quelconque des revendications précédentes, **caractérisé en ce que** l'élément profilé (9) présente une épaisseur de paroi d'environ 0,1 à 5,0 mm, de préférence de 0,2 à 3,0 mm.

9. Appareil de réfrigération et/ou de congélation selon l'une quelconque des revendications précédentes, **caractérisé en ce que** l'élément profilé (9) est agencé à distance de la section de bord (5) du composite de vitre (4) par l'intermédiaire d'au moins une chambre creuse (60) du profilé de cadre (6).
